# EUROPEAN PATENT APPLICATION

(11) **EP 2 416 304 A1**
(43) Date of publication of application: **08.02.2012**
(21) Application number: 10758294.2
(22) Date of filing: 31.03.2010
(51) Int. Cl.: G08G 1/13, G08G 1/09, H04W 4/02, H04W 4/04, H04W 64/00

(54) **POSITION INFORMATION MANAGEMENT SYSTEM, POSITION INFORMATION MANAGEMENT DEVICE, AND POSITION INFORMATION MANAGEMENT METHOD**

(30) Priority: 31.03.2009 JP 2009084982
(71) Applicant: NTT DOCOMO, INC., Chiyoda-ku Tokyo 100-6150 (JP)
(72) Inventor: ZHANG, Jianfeng, Tokyo 100-6150 (JP); HIRATA, Shoichi, Tokyo 100-6150 (JP); MAKINO, Yuushi, Tokyo 100-6150 (JP)
(74) Representative: Henseler, Daniela
(86) International application number: PCT/JP2010/002399
(87) International publication number: WO 2010/113515

(57) **Abstract**

There is provided a location information management system at a relatively low cost, whereby information including the location information of a vehicle can be managed without affecting the driving. In the location management system including a base transceiver station for transmitting a signal including base transceiver station identifying information, a ubiquitous module 201 for receiving the signal including the base transceiver station identifying information, and an FMS 105 for communicating with the ubiquitous module 201, the ubiquitous module 201 is provided with an analysis unit f306 or selecting at least one base transceiver station based upon a reception state of the signal including the base transceiver station identifying information, and a communication unit 305 for communicating the base transceiver station identifying information of the base transceiver station selected to the FMS 105. The FMS 105 is provided with an analysis unit 302 for identifying the base transceiver station selected from the base transceiver station identifying information transmitted, and a location range identifying unit 303 for identifying a range where the vehicle is located based upon the location of the base transceiver station identified.

## Description

### Technical Field

The prevent invention relates to a location information management system, a location information management apparatus, and a location information management method, and in particular, to a location information management system, a location information management apparatus, and a location information management method, whereby location information of vehicles or the like can be managed without the use of GPS or mobile telephones.

### Background Art

Currently, there is proposed a service for transmitting location information of a vehicle and notifying a defect of the vehicle or its travelling location to the exterior. As such a technique, for example, there are techniques described in Patent Document 1 and Non-Patent Document 1. In the electric control system described in Patent Document 1, information on the vehicle state (accidental fire in an engine) is transmitted to the base station together with the location information acquired with the use of Global Positioning System (GPS). In such Patent Document 1, the management center or the like for managing vehicles is capable of detecting the accidental fire in the vehicle engine and its location to make a quick action.

In addition, Non-Patent Document 1 describes that the location registration request of the mobile telephone carried by a vehicle passenger is utilized for observing the movement of the mobile telephone as a traffic flow. In Non-Patent Document, the location of the mobile telephone is identified with the antenna number of the base station.
Furthermore, in these years, there is proposed a system for managing travelling of vehicles or products in stock by use of a ubiquitous module. The ubiquitous module means a small-sized module in which a radio unit of a mobile telephone and an adaptor function of data communication are integrated. The ubiquitous module allows data transmission and reception by use of a communication service such as FOMA (registered trademark) or DoPa (registered trademark).
In the system utilizing the conventional ubiquitous module, the ubiquitous module is attached to a vehicle, a pet's collar, or the like, and the location information acquired by GPS is transmitted by the ubiquitous module to the exterior.

### Prior Art Document

### Patent Document

Patent Document 1: JP 2001-342890 A

### Non-Patent Document

Non-Patent Document: "Possibility to enforce a method to observe a traffic condition with the base station information of the cellular phone to support a disaster rescue operation" published in the Journal of Japan Society for Disaster Information Studies "Disaster Information No. 6 Mar. 2008", Koichi YAGI (Rescue operation supporting society by Traffic surveillance system)

### Summary of the Invention

### Problem to be solved

GPS, however, is capable of acquiring the location information with high accuracy, but is known for its comparatively high cost for installation. For this reason, the technique with the use of GPS as described in Patent Document 1 could be disadvantageous to its prevalence from the viewpoint of cost.
Moreover, in Non-Patent Document 1, the location information is not acquirable, unless the power of the mobile telephone carried by the passenger is turned on.
Hence, if the mobile telephone is powered off while driving in consideration of safety, there is a drawback that the location information is not acquirable.
The present invention has been made in view of the above circumstances, and has an object to provide a location information management system, a location information management apparatus, and a location information management method, whereby location information of a vehicle is transmitted to the exterior without the use of GPS or a mobile telephone, so that information including the location information of the vehicle can be managed at a relatively low cost without affecting driving.

### Solution to the Problem

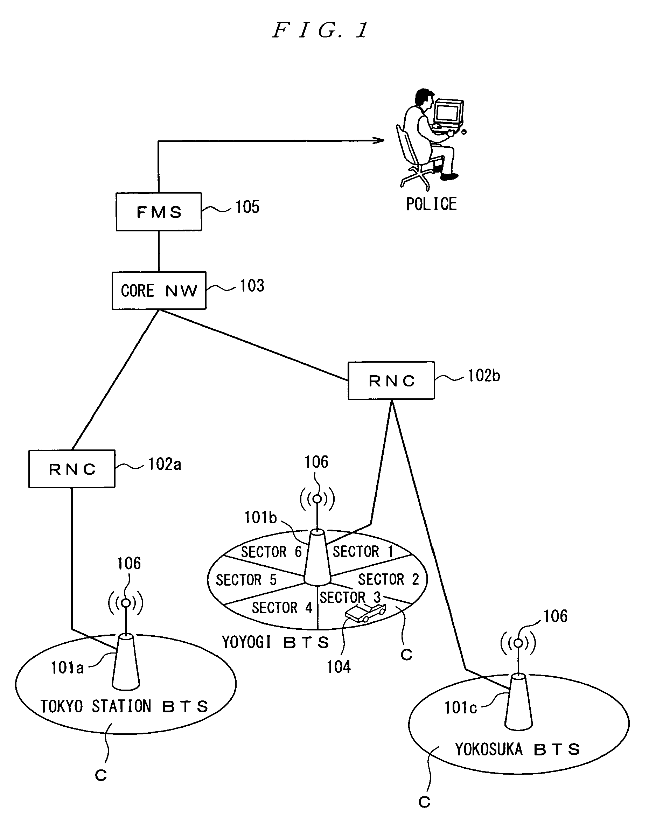

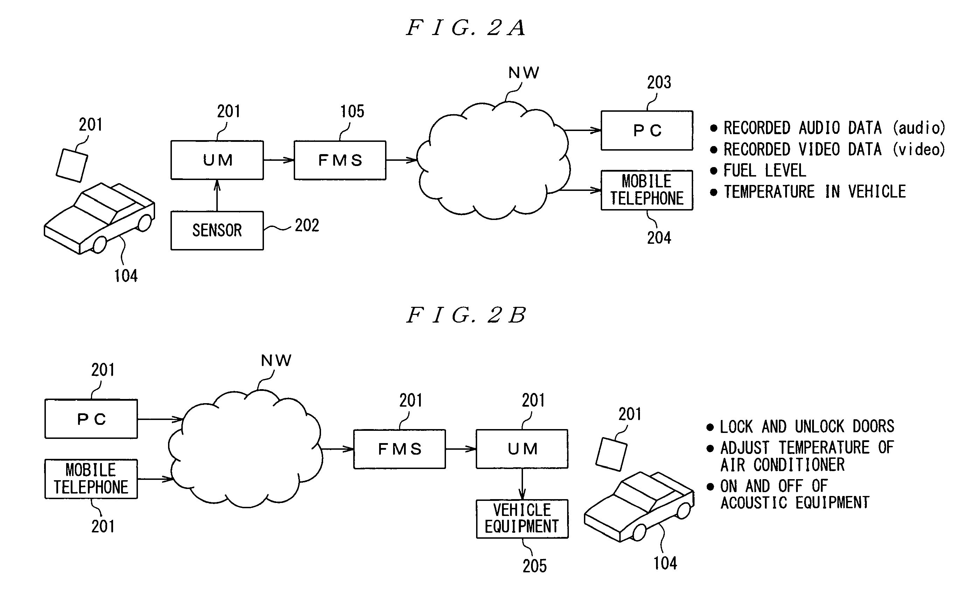

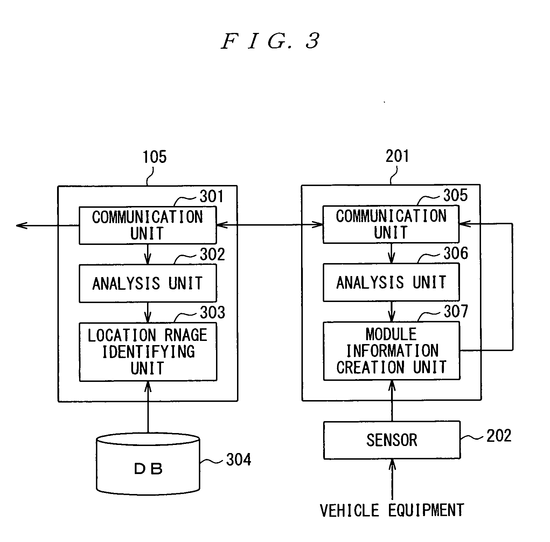

In order to solve the above problem, there is provided a location information management system as recited in claim 1, comprising: a base transceiver station (for example, base transceiver stations 101a, 101b, 101c illustrated in FIG. 1) for transmitting a signal including base transceiver station identifying information for identifying each base transceiver station; a radio module (for example, ubiquitous module 201 illustrated in FIG. 2), attached to a moving body (for example, vehicle 104 illustrated in FIG. 1), for receiving the signal including the base transceiver station identifying information transmitted from the base transceiver station; and a location information management apparatus (for example, FMS 105 illustrated in FIG. 1) for communicating with the radio module, wherein the radio module comprises: a base transceiver station selecting unit (for example, analysis unit 306 illustrated in FIG. 3) for, upon
receipt of the signal including the base transceiver station identifying information from each of the base transceiver stations, selecting at least one base transceiver station based upon a reception state of the signal; and a transmission unit (for example, communication unit 305 illustrated in FIG. 3) for transmitting the base transceiver station identifying information selected by the base transceiver station selecting unit to the location information management apparatus, wherein the location information management unit comprises: a base transceiver station identifying apparatus (for example, analysis unit 302 illustrated in FIG. 3) for identifying the base transceiver station selected by the base transceiver station selecting unit based upon the base transceiver station identifying information transmitted from the transmission unit; and a location range identifying unit (for example, location range identifying unit 303 illustrated in FIG. 3) for identifying a range where the moving body is located, based upon a location of the base transceiver station identified by the base transceiver station identifying unit. According to the above invention, the range where the moving body is located can be identified by the radio module only, with the use of equipment provided for a mobile telephone or the like. Consequently, the location information of a vehicle can be managed without the necessity of keeping the mobile telephone on or installing the GPS functionality therein. It is therefore possible to provide the location information management system at a relatively low cost, whereby information including the location information of the vehicle can be managed without affecting the driving of the vehicle.

In addition, according to the location information management system as recited in claim 2, in the invention according to claim 1, wherein the base transceiver station may transmit sector information, indicative of a sector that is a communication range of an antenna from which the base transceiver station identifying information, together with the base transceiver station identifying information, wherein the transmission unit of the radio module may transmit the sector information together with the base transceiver station identifying information to the location information management apparatus, wherein the location information management apparatus further comprises a sector identifying unit (for example, the analysis unit 306 illustrated in FIG. 3) based upon the sector information, and wherein the location range identifying unit identifies the range where the moving body is located, based upon the location of the base transceiver station identified by the base transceiver station identifying unit and the sector identified by the sector identifying unit. According to the above invention, in which direction from the base transceiver station the vehicle is located can be identified. It is therefore possible to enhance the accuracy of location identification in the location information management system.

Furthermore, according to the location information management system as recited in claim 3, in the invention according to claim 1 or claim 2, wherein the moving body may comprise a moving body information acquisition unit for acquiring information on the moving body, and wherein the radio module may transmit the information acquired by the moving body information acquisition unit to the location information management unit, together with the base transceiver station identifying information. According to the above invention, for example, information on the vehicle speed, the in-vehicle temperature, the weight of the load, or the door locking state can be transmitted to the exterior. It is therefore possible for the location information management system to detect the state of the moving body together with the location information, whereby a defect of the vehicle can be handled quickly.

Moreover, according to the location information management system as recited in claim 4, in the invention according to any one of claim 1 to claim 3, wherein the radio module may further comprise a reception unit for receiving a control signal of controlling equipment relating to the moving body, and, when the control signal is received by the reception unit, transmits a signal for controlling the equipment based upon the control signal to the equipment. According to the above invention, the equipment relating to the moving body can be controlled from a remote place, whereby an operation same as the keyless entry system can be made by use of a mobile telephone or the like.

Additionally, there is provided a location information management system as recited in claim 5, comprising: a reception unit for receiving base transceiver station identifying information for identifying a base transceiver station from a radio module attached to a moving body; a base transceiver station identifying unit for identifying at least one base transceiver station from the base transceiver station identifying information received by the reception unit; and a moving body location range identifying unit for identifying a range where the moving body is located, based upon a location of the base transceiver station identified by the base transceiver station identifying unit. According to the above invention, the location information of a vehicle can be managed without the necessity of keeping the mobile telephone on or installing the GPS functionality therein. It is therefore possible to provide the location information management system at a relatively low cost, whereby information including the location information of the vehicle without affecting the driving of the vehicle.

Furthermore, there is provided a location information management method as recited in claim 6, comprising: a reception step for receiving base transceiver station identifying information for identifying a base transceiver station from a radio module attached to a moving body; a base transceiver station identifying step for identifying at least one base transceiver station from the base transceiver station identifying information received by the reception step; and a moving body location range identifying step for identifying a range where the moving body is located, based upon a location of the base transceiver station identified by the base transceiver station identifying step. With the above invention, it is made possible to manage the location information of vehicles without the need of powering on the mobile telephone in the moving body or without installing the GPS functionality. Accordingly, it is possible to provide the location management method of enabling the management of the information including the location information of vehicles at a relatively low cost without affecting the driving of the vehicles. With the above invention, it is made possible to manage the location information of vehicles without the need of powering on the mobile telephone in the moving body or without installing the GPS functionality. Accordingly, it is possible to provide the location management method of enabling the management of the information including the location information of vehicles at a relatively low cost without affecting the driving of the vehicles.

### Advantageous Effects of the Invention

According to the present invention, it is made possible to manage the location information of vehicles without need of powering on the mobile telephone in the moving body or without installing the GPS function. Therefore, it is possible to provide the location management system, the location management apparatus, and the location management method of enabling the management of the information including the location information of vehicles at a relatively low cost without affecting the driving of the vehicles.

### Brief Description of the Drawings

FIG. 1 is a view illustrative of an outline configuration of the entirety of a location information management system according to an embodiment of the present invention;
FIG. 2A and FIG. 2B are views illustrative of communication in the location information management system illustrated in FIG. 1;
FIG. 3 is a functional block diagram of an FMS and a ubiquitous module illustrated in FIG. 1, FIG. 2A, and FIG. 2B;
FIG. 4 illustrates location information with respect to base transceiver station identifying information and sector information according to an embodiment of the present invention;
FIG. 5 is a view illustrative of a relationship between a sector number and the location information according to an embodiment of the present invention;
FIG. 6 is a view illustrative of a method of identifying a moving route of a vehicle according to an embodiment of the present invention;
FIG. 7 is a schematic diagram illustrative of an operation of the location information management system according to an embodiment of the present invention;
FIG. 8 is a flowchart illustrative of an operation of a ubiquitous module according to an embodiment of the present invention; and
FIG. 9 is a flowchart illustrative of an operation of the FMS.

### Description of Embodiments

Hereinafter, a description will be given of an embodiment of a location information management system, a location information management apparatus, and a location information management method according to the present invention with reference to the attached drawings.

### (Outline Configuration)

FIG. 1 is a view illustrative of an outline configuration of the entirety of a location information management system according to an embodiment of the present invention. The illustrated location information management system includes: base transceiver stations 101a, 101b, and 101c each transmitting base transceiver station identifying information for identifying each of them; a ubiquitous module (illustrated in FIG. 2), attached to a moving body, as a radio module for receiving the base transceiver station identifying information transmitted from the base transceiver stations 101a, 101b, and 101c; and a Fleet Management System (FMS) 105 for communicating with the ubiquitous module. The base transceiver stations 101a, 101b, and 101c are illustrated as BTS in the drawings.

The base transceiver stations 101a, 101b, and 101c each manage a different cell c. The base transceiver station 101a manages a cell c including Tokyo station. In addition, the base transceiver station 101b manages a cell c in Yoyogi, and the base transceiver station 101c manages a cell c in Yokosuka. An antenna 106 equipped in each of the base transceiver stations 101a, 101b, and 101c in the present embodiment according to the present invention is a directional sector antenna for transmitting and receiving in all directions with the use of multiple planner directional antenna elements.

Multiple antenna elements have different directivities, respectively, and transmit and receive signals in a prescribed range. Such a prescribed range is referred to as sector, and each antenna element and sector will be identified as sector number in the present embodiment. Information including the sector number is referred to as sector information in the present embodiment. The base transceiver stations 101a, 101b, and 101c each transmit the base transceiver station identifying information together with the sector information of the antenna element that has transmitted a signal including the base transceiver station identifying information.

Specifically, the sector antenna is a known component as described in NTT Technical Journal, June 2007, Pages 67, 68, "Introduction of NTT patent, "Sector Antenna"".
The base transceiver stations 101a, 101b, and 101c each are connected to a Radio Network Controller (RNC) 102a or 102b. The RNCs 102a and 102b are connected to an FMS 105 through a core network (indicated by NW in the drawing) that is a backbone communication network.

Further, in the present embodiment, the radio module is installed in a vehicle 104 as a moving body.
In the present embodiment, the ubiquitous module of FOMA (registered trademark) is used as the radio module. The ubiquitous module is a known component as described in "Docomo Radio Packet Communication Terminal for Business, Ubiquitous Module" [online], searched on January 13, 2009, Internet
<http://www.docomo.biz/module/usecase/index.html>

The FMS is a system in which the radio module is installed in a vehicle and the management side receives transmission signals of the location information of the vehicle from the radio module. In the present embodiment, the FMS 105 refers to management center for acquiring the location information by means of FMS. In the present embodiment, the FMS 105 functions as a location information management apparatus.
According to the FMS, the location of the vehicle is learnt from the location information of the vehicle, so that the allocation of cars or deliveries of articles can be managed. Additionally, according to the FMS, the vehicle speed or idling time is transmitted together with the location information from the radio module, so that the management side can monitor them. Furthermore, the management side transmits a defect of a vehicle to the police station or the like, thereby contributing to the search or the like of stolen vehicles.

Such an FMS is a known system as described in, for example, Allied Business Intelligence, Inc. "Fleet Management System (FMS): Business chance, trend, and forecast of global commercial telematics", [online], searched on January 13, 2009, Internet
<http://www.dri.co.jp/auto/report/abi/abifms08.htm>
Hence, a detailed description will be omitted.

In a normal FMS, however, GPS as well as the radio module are installed in a vehicle, so that the location information of GPS is transmitted by the radio module. The present embodiment, however, as will be described later, is different from the conventional FMS in that information on the location registration of the radio module is utilized as the location information.

### (Communication)

FIG. 2A and FIG. 2B are views illustrative of communication in the location information management system illustrated in FIG. 1. FIG. 2A illustrates a sequence of communication in a case where information including location information is transmitted from a ubiquitous module (indicated by UM in the drawing) 201 through the FMS 105 to a user's personal computer (PC) 203 or mobile telephone 204. Specifically, it is assumed that a user of the personal computer 203 or the mobile telephone 204 should be identical to that of the vehicle 104.
FIG. 2B illustrates a sequence of communication in a case where an instruction signal for vehicle control transmitted from the PC 203 or the mobile telephone 204 is transmitted to the FMS 105, and the FMS 105 transmits a control signal to the ubiquitous module 201.

As described above, the base transceiver station transmits the signal including the sector information together with the base transceiver station identifying information. The ubiquitous module 201 installed in the vehicle 104 receives the information including the base transceiver station identifying information and the sector information. Then, as illustrated in FIG. 2A, a location registration is requested to an antenna of the base transceiver station that has transmitted the strongest signal among the received signals, by transmitting to the above antenna the signal including the base transceiver station identifying information of this antenna and the sector information. The signal including the base transceiver station identifying information and the sector information is also transmitted to the FMS 105 through the base transceiver station, the RNC, or the like.
The FMS 105 compares the base transceiver station identifying information and the sector information included in the location registration request with map information or the like to identify a range where the vehicle 104 is located. Such an identified location range will be hereinafter referred to as location information. The location information is transmitted through the network NW to the PC 203 or the mobile telephone 204 to notify the user of the vehicle 104.

In addition, as illustrated in FIG. 2A, in the present embodiment, the vehicle 104 is equipped with the ubiquitous module 201 and a sensor 202. The sensor 202 is a sensor of acquiring information on the vehicle 104 from vehicle equipment. The information acquired by the sensor may include, for example, temperature in the vehicle, fuel level, and travelling speed. In addition, instead of the sensor 202, video equipment may be employed for recording states in the vehicle and creating recorded video data or audio equipment (acoustic equipment) for recording sounds in the vehicle and creating recorded audio data.

In the present embodiment, the ubiquitous module 201 acquires the signal detected by the sensor 202, and transmits the signal together with the signal including the base transceiver station identifying information and the sector information to the FMS 105 through the base transceiver station. With such a configuration, in the FMS 105, it is made possible to understand not only the location of the vehicle 104 but also the states or the temperature in the vehicle.
Specifically, the signal detected by the sensor 202 to be transmitted to the FMS 105 will be hereinafter referred to as vehicle information.

Also, as illustrated in FIG. 2B, when the instruction signal for instructing the vehicle control of the vehicle 104 from the PC 203 or the like through the network NW to the FMS 105, the FMS 105 transmits to the ubiquitous module 201 a control signal for controlling the vehicle 104 in accordance with the instruction signal. The ubiquitous module 201 transmits the control signal to the vehicle equipment 205 such as audio equipment, door locks, and an air conditioner. The door locks that have received the control signal lock or unlock the doors, and the air conditioner or the audio equipment is turned on or off.

### (Function)

FIG. 3 is a functional block diagram of the FMS 105 and the ubiquitous module 201 illustrated in FIG. 1, FIG. 2A, and FIG. 2B. Hereinafter, with reference to FIG. 3, the functions of the FMS 105 and the ubiquitous module 210 will be described.

### 1. Ubiquitous Module

The ubiquitous module 201 is provided with: a communication unit 305 for receiving the base transceiver station identifying information and the sector information transmitted from the base transceiver stations; an analysis unit 306 for, when the communication unit 305 receives the signal including the base transceiver station identifying information from each of the multiple base transceiver stations, selecting at least one base transceiver station based upon the reception state of the signal, and identifying a communication range of the antenna element that has transmitted the signal in the base transceiver station; and a module information creation unit 307 for acquiring the signal output from the sensor 202 as necessary, and creating module information by combining the base transceiver station identifying information of the base transceiver station selected by the analysis unit 306 and the sector information of the identified sector. Such created module information is transmitted from the communication unit 305 through the core network 103 or the like to the FMS 105.

### 2. FMS

The FMS is provided with a communication unit 301 for receiving the base transceiver station identifying information and the sector information that have been transmitted; an analysis unit 302 for identifying the base transceiver station and the sector selected by the analysis unit 306 from the base transceiver station identifying information and the sector information; and a location range identifying unit 303 for identifying a range where the vehicle 104 is located based upon the location of the identified base transceiver station. A database (DB) 304 holds map information or the like necessary for the location range identifying unit 303 to identify the range where the vehicle 104 is located by use of the base transceiver station identifying information and the sector information.

### 2.1 Location Range Identifying Unit

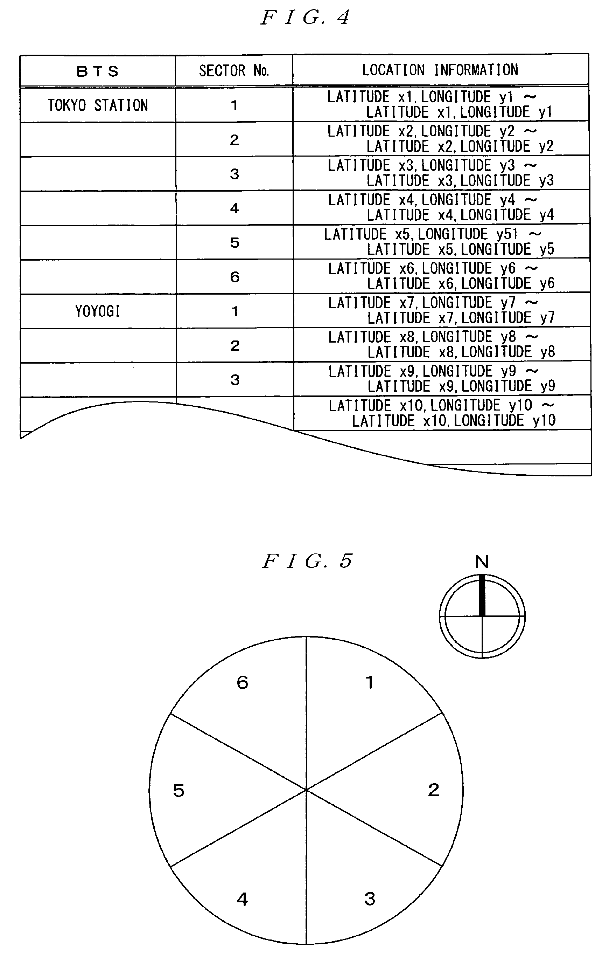

FIG. 4 illustrates data stored in the DB, and illustrates the location information with respect to the base transceiver station identifying information and the sector information. Six sectors are set at each of the base transceiver stations such as Tokyo Station or Yoyogi. The location information denotes information indicative of the location range, which is set for each sector, and the vehicle of which is estimated to be located when the sector is selected, set for each sector. Specifically, in the example illustrated in FIG. 4, the location information is represented by latitude and longitude. The location information according to the present embodiment, however, may be represented by another expression method such as address or the like.

FIG. 5 is a view illustrative of a relationship between the sector number and the location information. In the present embodiment, six sectors are set in the base transceiver station, and a single antenna element configuring the antenna 106 illustrated in FIG. 1 is assigned to each sector. As illustrated, six sectors are set for different directions from each other to cover all directions.
Among the antenna elements, the sector corresponding to the strongest reception signal shows the direction in which the vehicle is located with respect to the base transceiver station. According to the present embodiment as described above, it is made possible to identify the location of the vehicle in a narrower range than to identify the location of the vehicle depending on the base transceiver station. That is to say, it is made possible to identify the location of the vehicle with higher accuracy.

Specifically, the vehicle moves beyond cells, handover of the ubiquitous module occurs, and the base transceiver stations or the sectors to be subject to the location registration are switched. The location information corresponding to the base transceiver station and the sector to be subject to the location registration is successively recorded, thereby enabling a moving route of the vehicle to be identified.

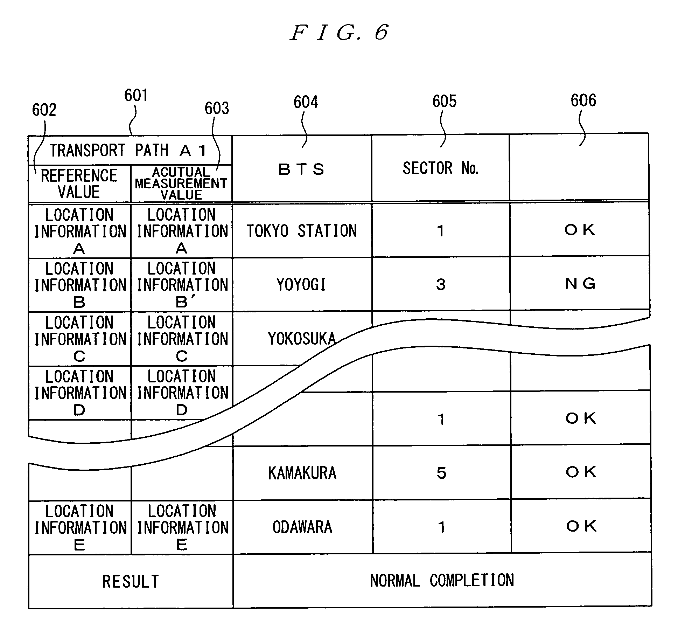

FIG. 6 is a view illustrative of a method of identifying a moving route of a vehicle. When a vehicle moves on a prescribed route (indicated by a transport path A1 in the drawing), the information on the base transceiver station (indicated by BTS in the drawing) that has undergone the location registration and the sector number is successively transmitted from the ubiquitous module to the FMS. The location range identifying unit of the FMS successively records the information on the base transceiver station and the sector number that has been transmitted. The base transceiver station recorded is shown in column 604 of FIG. 6, and the sector number recorded is shown in column 605.

The location information corresponding to the base transceiver station and the sector number is shown in column 603 of FIG. 6, as actual measurement values. A series of the actual measurement values shown in column 603 represent a route on which the vehicle has moved actually. The location range identifying unit compares the actual measurement value with a reference value shown in column 602. The reference value is appropriate location information acquirable when the vehicle has moved on the transport path A1.
As a result of comparing the actual measurement value with the reference value, when both values match, the vehicle is considered to move on an appropriate route and "OK" is recorded in column 606. On the other hand, the both values do not match, the vehicle has left the route and "NG" is recorded in column 606. The FMS determines whether or not the vehicle moves normally based upon the series of records recorded in column 606.

The movement of the vehicle may be determined normal, for example, if the number of "NG"s falls within a range of a prescribed number. Additionally, the movement of the vehicle may be determined normal, if a difference between the reference value and the actual measurement value falls within a prescribed range. Furthermore, the movement of the vehicle may be determined normal, if the location information is once determined "NG", but is determined "OK" again in accordance with the movement of the vehicle.
Moreover, the movement of the vehicle may be determined abnormal, for example, at a time when a difference between the reference value and the actual measurement value is equal to or longer than a prescribed distance. Alternatively, the movement of the vehicle may be determined abnormal, for example, at a time when a difference between the reference value and the actual measurement value continues a prescribed period of time or more. In those cases, according to the present embodiment, a warning may be given to a vehicle passenger by use of the ubiquitous module.

The above embodiment is applicable to the management of bus services in a bus company or the management of long-distance tracks. Additionally, an appropriate route from a source to a destination is set before the taxi starts travelling, thereby making use of it for the delivery or management of taxis in a taxi company.
Specifically, in the present embodiment, the moving body has been described as a vehicle. However, the moving body is not limited to a vehicle, and may be a railroad car, a person, or an animal.
Moreover, in the present embodiment, the location information management apparatus has been described as a Fleet Management System (FMS according to the present embodiment).
However, the present embodiment is not limited to the above configuration. Any apparatus may be employed as the location information management apparatus, as long as it is capable of managing the ubiquitous module. As another apparatus of the above-described location information management apparatus, for example, FOMA (registered trademark) Ubiquitous Module Management System (FMS) is conceivable.

### (Operation)

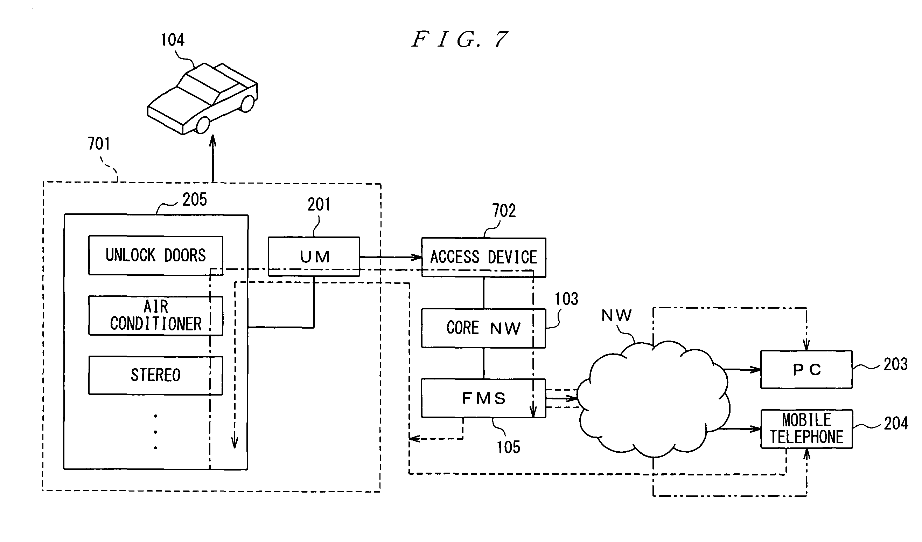

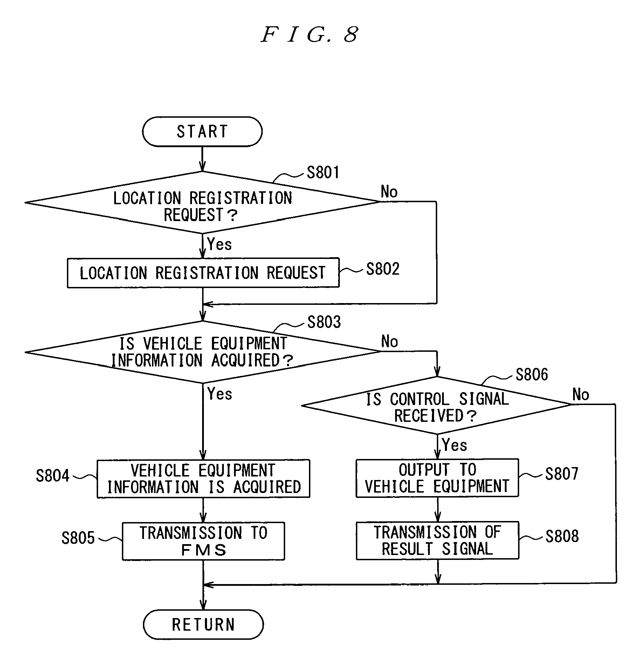

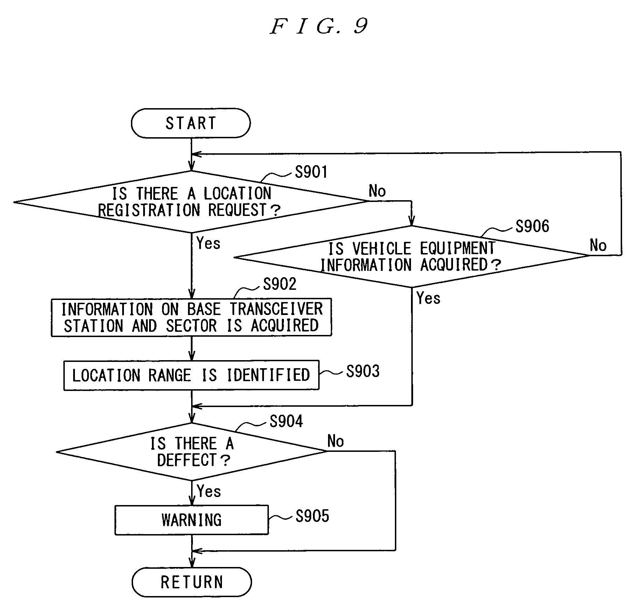

Next, an operation of the location information management system described heretofore will be described. FIG. 7 is a schematic diagram illustrative of an operation of the location information management system. Additionally, FIG. 8 is a flowchart illustrative of an operation of the ubiquitous module 201 in the operations illustrated in FIG. 7. FIG. 9 is a flowchart illustrative of an operation of the FMS 105.
The configuration surrounded by a broken line 701 of FIG. 7 is one arranged in the vehicle 104. The vehicle equipment 205 includes an actuator of unlocking the doors, a sensor of detecting the unlocked doors, a switch of turning on or off the air conditioner or the audio equipment, and a sensor of detecting on or off thereof.

On the other hand, a user is able to request to acquire the location information of the vehicle 104 or to unlock the doors of the vehicle 104 from the PC 203 or the mobile telephone 204. Alternatively, the user is able to request turning on or off the air conditioner. The request for the location registration information or unlocking of the doors is transmitted through the network NW to the FMS 105. Upon receipt of the request for the location registration information, the FMS 105 transmits the location range identified based upon the location registration request from the ubiquitous module 201, to the PC 203 or the mobile telephone 204.

Additionally, when the unlocking of the doors is requested, the FMS 105 transmits the control signal of unlocking the doors to the ubiquitous module 201. The ubiquitous module 201 outputs the control signal of operating the actuator of the door locks in response to the transmitted control signal, and unlocks the doors. When turning on of the air condition is requested, the FMS 105 outputs a control signal of switching on the air conditioner to cause the ubiquitous module 201 to operate the air conditioner.

Here, with reference to FIG. 8 and FIG. 9, the operations of the ubiquitous module 201 and the FMS 105 will be described. As illustrated in FIG. 8, the ubiquitous module 201 determines whether or not the ubiquitous module 201 should issue a location registration request. The location registration request is issued when the ubiquitous module 201 is shifted from the off state to the on state, or when the handover occurs (step S801). When it is determined that the location registration request should be issued (step S801: Yes), the ubiquitous module 201 issues the location registration request (step S802).

Next, the ubiquitous module 201 determines whether or not the information on the vehicle equipment should be acquired from a sensor (step S803). The determination at step S803 may be made periodically, or may be made when there is a request from the FMS. Specifically, at step S801, when it is determined that the location registration request should not be issued (step S801: No), the ubiquitous module 201 proceeds to the determination at step S803 without issuing the location registration request.
When it is determined that the information on the vehicle equipment should be acquired (step S803: Yes), the ubiquitous module 201 acquires the information on the vehicle equipment from a sensor (step S804). This information may include, for example, the vehicle speed, the temperature in the vehicle, the weight of the load, or the like. Then, the acquired information is transmitted to the FMS (step S805).

Moreover, when it is determined that the information on the vehicle equipment should not be acquired (step S806: No), the ubiquitous module 201 determines whether or not the control signal has been received from the FMS (step S806). When it is determined that the control signal has been received (step S806: Yes), the received control signal is output to the vehicle equipment to control the vehicle equipment (step S807). In the present embodiment, the control result of the vehicle equipment is transmitted to the FMS, as a result signal (step S808). As a result, the FMS is notified that the doors are unlocked or the air conditioner is switched on. Specifically, when the control signal for the vehicle equipment has not been received from the FMS (step S806: No), the ubiquitous module 201 returns to the process of determining the location registration request again.

On the other hand, the FMS determines whether or not the ubiquitous module 201 has issued the location registration request to the base transceiver station (step S901), as illustrated in FIG. 9. When there is a location registration request (step S901: Yes), the information on the base transceiver station that has received the location registration request and the sector is acquired (step S902). Then, from the acquired information on the base transceiver station and the sector, as described with reference to FIG. 6, the range where the vehicle is located can be identified (step S903).

Subsequently, the FMS determines whether or not a defect occurs by acquiring the route on which the vehicle moves from the successive location ranges (step S904).
In addition, at step S901, when it is determined that there is no location registration request (step S901: No), the FMS 105 determines whether or not the information on the vehicle equipment has been received (step S906). If the information on the vehicle equipment has been received (step S906: Yes), it is determined whether or not a defect occurs at the vehicle based upon the received information (step S904).

At step S904, it is determined that a defect occurs at the vehicle equipment or the moving route (step S904: Yes), the FMS gives a warning to a vehicle passenger via the ubiquitous module 201 (step S905). The warning may be made by voices of "The route is wrong. Please correct" or "The traveling speed should be slowed down", or by a beep sound of a buzzer or the like.
Additionally, if the warning is given to a user via the mobile telephone or the like, instead of being given to the vehicle, it is possible to notify the user of a defect occurring while the user is apart from the vehicle. The warning with the use of the mobile telephone can be given by use of, for example, a prescribed music, a buzzer sound, or a vibrator installed in the mobile telephone.

In such an example, a warning is given when the vehicle engine is started or the doors are unlocked, thereby informing the user of a vehicle theft promptly. Alternatively, a warning is given when the temperature in the vehicle rises and becomes equal to or higher than a threshold value, thereby making it possible to prevent cans or the like in the vehicle from bursting before it happens.
Moreover, a shock sensor is provided in the vehicle. When the shock sensor detects an impact equal to or greater than a threshold value, a warning can be given to the user via the mobile telephone. With such a configuration, it is made possible to detect not only the vehicle theft but also a vehicle break-in or tow-away.

In addition, in the present embodiment, the vehicle equipment is controlled by use of the mobile telephone, whereby the doors of the vehicle can be unlocked with the mobile telephone like the keyless entry system. Alternatively, it is possible to switch on the air conditioner and adjust the temperature before getting in a vehicle.
Furthermore, according to the present embodiment, if there is a possibility that a vehicle is stolen, the audio equipment or a preset warning apparatus can be turned on from remote locations. Such an operation is achieved by transmitting the control signal to the FMS via the mobile telephone, when a warning is given that the doors are unlocked or the engine is started.

### Industrial Availability

A location information management system, a location information management apparatus, and a location information management method, according to the present invention, are applicable to a system for managing commercial vehicles such as taxies, tracks, and buses. Additionally, radio modules are installed in ordinary vehicles so that information including the locations of the vehicles is transmitted to the management agent of high-speed ways or the like, thereby making it possible to detect a speeding vehicle or a disabled vehicle. Furthermore, the location information management system, the location information management apparatus, and the location information management method, according to the present invention are configured to transmit the information including the location information to a security firm or the police station, thereby contributing to the preventive measures or early detection of crimes.

### Reference Signs List

- 101a, 101b, 101c: base transceiver station
- 103: core network
- 104: vehicle
- 105: location information management apparatus
- 106: antenna
- 201: ubiquitous module
- 202: sensor
- 204: mobile telephone
- 205: vehicle equipment
- 301, 305: communication unit
- 302, 306: analysis unit
- 303: location range identifying unit

## Claims

1. A location information management system, comprising:
a base transceiver station for transmitting a signal including base transceiver station identifying information for identifying each base transceiver station;
a radio module, attached to a moving body, for receiving the signal including the base transceiver station identifying information, transmitted from the base transceiver station; and
a location information management apparatus for communicating with the radio module,
wherein the radio module comprises:
a base transceiver station selecting unit for, upon receipt of the signal including the base transceiver station identifying information from each of the base transceiver stations, selecting at least one base transceiver station based upon a reception state of the signal; and
a transmission unit for transmitting the base transceiver station identifying information selected by the base transceiver station selecting unit to the location information management apparatus,
wherein the location information management apparatus comprises:
a base transceiver station identifying unit for identifying the base transceiver station selected by the base transceiver station selecting unit based upon the base transceiver station identifying information transmitted from the transmission unit; and
a location range identifying unit for identifying a range where the moving body is located, based upon a location of the base transceiver station identified by the base transceiver station identifying unit.

2. The location information management system according to claim 1,
wherein the base transceiver station transmits sector information, indicative of a sector that is a communication range of an antenna from which the base transceiver station identifying information, together with the base transceiver station identifying information,
wherein the transmission unit of the radio module transmits the sector information together with the base transceiver station identifying information to the location information management apparatus,
wherein the location information management apparatus further comprises a sector identifying unit based upon the sector information, and
wherein the location range identifying unit identifies the range where the moving body is located, based upon the location of the base transceiver station identified by the base transceiver station identifying unit and the sector identified by the sector identifying unit.

3. The location information management system according to claim 1 or claim 2,
wherein the moving body comprises a moving body information acquisition unit for acquiring information on the moving body, and
wherein the radio module transmits the information acquired by the moving body information acquisition unit to the location information management apparatus, together with the base transceiver station identifying information.

4. The location information management system according to any one of claim 1 to claim 3,
wherein the radio module further comprises a reception unit for receiving a control signal of controlling equipment relating to the moving body, and, when the control signal is received by the reception unit, the radio module transmits a signal for controlling the equipment based upon the control signal to the equipment.

5. A location information management apparatus comprising:
a reception unit for receiving base transceiver station identifying information for identifying a base transceiver station from a radio module attached to a moving body;
a base transceiver station identifying unit for identifying at least one base transceiver station from the base transceiver station identifying information received by the reception unit; and
a moving body location range identifying unit for identifying a range where the moving body is located, based upon a location of the base transceiver station identified by the base transceiver station identifying unit.

6. A location information management method comprising:
a reception step for receiving base transceiver station identifying information for identifying a base transceiver station from a radio module attached to a moving body;
a base transceiver station identifying step for identifying at least one base transceiver station from the base transceiver station identifying information received by the reception step; and
a moving body location range identifying step for identifying a range where the moving body is located, based upon a location of the base transceiver station identified by the base transceiver station identifying step.
